# EUROPEAN PATENT APPLICATION

(11) **EP 2 533 107 A2**
(43) Date of publication of application: **12.12.2012**
(21) Application number: 12159516.9
(22) Date of filing: 14.03.2012
(51) Int. Cl.: G03G 15/00

(54) **Image forming apparatus, energy-conversion control method, and computer program product for energy conservation control**

(30) Priority: 18.03.2011 JP 2011060951; 18.11.2011 JP 2011252629
(71) Applicant: Ricoh Company, Ltd., Tokyo 143-8555 (JP)
(72) Inventor: Nagayama, Kemmi, Ohta-ku, Tokyo 143-8555 (JP)
(74) Representative: Maury, Richard Philip

(57) **Abstract**

According to an embodiment, an image forming apparatus (PR) is connected to a network and is configured to transit into an energy-conservation standby state. The apparatus (PR) includes: a switching element (510h and 514c) that switches on/off power supply (514b) of a peripheral device (300) connected thereto; and a control unit (510b) that controls on/off-switching operation of the switching element (510h and 514c). The control unit (510b), when the image forming apparatus (PR) recovers from the energy-conservation standby state, switches on the power supply (514b) of the peripheral device (300) for a short time; performs an initialization operation of the peripheral device (300); determines whether an option is mounted on the peripheral device (300); and thereafter switches on/off of the power supply (514b) of the peripheral device (300) based on a type of a job input into the image forming apparatus (PR) over the network.

## Description

### CROSS-REFERENCE TO RELATED APPLICATIONS

The present application claims priority to and incorporates by reference the entire contents of Japanese Patent Application No. 2011-060951 filed in Japan on March 18, 2011 and Japanese Patent Application No. 2011-252629 filed in Japan on November 18, 2011.

### BACKGROUND OF THE INVENTION

### 1. Field of the Invention

The present invention relates generally to image forming apparatuses, energy-conservation control methods, and computer program products for energy conservation control, and more particularly, to a technique for energy conservation of an image forming apparatus including a peripheral device connected or annexed to the image forming apparatus.

### 2. Description of the Related Art

Environmental issues have become important in recent years, and energy conservation (power saving) of equipment such as copiers, printers, and digital multifunction products that forms images is also advancing. Complex systems of this type are generally controlled such that, every time a predetermined unused period elapses after power-up, the system shifts into a next lower consumption state in an order of a standby mode, a preheating mode, a low power mode, and a sleep mode to be placed on standby at each state. As an index for such energy conservation, Typical Electricity Consumption (TEC) values have been introduced. The TEC value is a reference value for conforming to the "International ENERGY STAR (registered trademark) program" of The Energy Conservation Center, Japan, and indicates "electricity consumed over a conceptual week" in office equipment such as a printer. The "electricity consumed over a conceptual week" is obtained by measuring and calculating electricity (kWh) consumed in five days of operation with sleep/off being repeated, plus two days (holidays) of sleep/off. Note that in the specification and appended claims, energy conservation is referred to as conserving energy, which is generally used.

Meanwhile, a complex system including a printer or the like is generally controlled so as to recover all the functions of the system when an operation, examples of which are listed below, is performed to use the system that has entered an energy-conservation standby state.
- Pressing a power supply button provided on an operation panel
- Loading paper on an ADF
- Operating an original-pressing plate

However, conventional energy conservation control undesirably supplies power even to an engine section that needs not to be used in a case where a user desires to store information in an HDD of a copier by using only a scanner function, a case where a user desires to store information in a document storage, a case where a user desires to use the system only for data transmission in facsimile, or the like. Hence, power supply even to needless functions that are not to be used is recovered. As a result, energy conservation function is insufficiently made use of, and a TEC value becomes large.

To solve this, for example, there has already been proposed a technique of recovering power supply only to necessary portion in Japanese Patent Application Laid-open No. 2004-222234. According to the technique disclosed in Japanese Patent Application Laid-open No. 2004-222234, a complex system including an operation panel is configured such that when the system is in an energy-conservation standby state, recovery from the energy conservation state occurs only when any one of a copy button, a document storage button, a facsimile button, a printer button, and a scanner button, which are provided individually for functions, is selected and pressed, in contrast to a conventional complex system that starts power supply to all of the functions in response to a user operation that is any one of pressing a power supply button, loading an original on an ADF, and operating an original-pressing plate. Furthermore, the system is configured to recover power supply of only portion necessary for the function. Similarly, recovery from an energy conservation state for a job received over a network is also made by recovering power supply of only necessary portion.

However, the control of recovering power supply of only necessary portion described above is disadvantageous in that it is not possible to perform management during initialization operation of an image forming apparatus and state management of equipment after recovery from sleep. For instance, as for options such as a bank, an ADF, and a finisher of an image forming apparatus, an engine CPU detects which option(s) is mounted and performs control. However, during a sleep mode, generally, electric power supply only to a network-related interface is on, while power supplies on the engine side are all in an off mode. Accordingly, even when power supply of necessary portion is recovered after recovery from the sleep mode, the engine CPU does not function because power-supplies on the engine side are off. Consequently, a main control CPU is unable to determine which option is mounted, and cannot perform an initialization operation.

More specifically, for a scanner, it is necessary to detect home position (HP) and operate a carriage; this control is controlled by the engine CPU. The same goes for an ADF that is to be mounted on the scanner. Accordingly, even for a user that uses only the scanner function, it is necessary to perform initialization operation of the HP detection and the carriage operation. In conclusion, this operation cannot be performed unless otherwise the power supplies of the engine side are on. Furthermore, if the scanner power supply is off when the configuration of the image forming apparatus is changed (an option is additionally mounted), there is no means for obtaining information about whether the option has been changed.

To overcome these disadvantages, there is a method of performing state management of equipment such as options by mounting a CPU on a scanning unit to perform independent control, or by storing equipment information about the image forming apparatus that is not yet entered the sleep mode in nonvolatile memory. However, such a configuration disadvantageously increases cost due to the additional CPU and memory.

Under the circumstances, there is a need to increase energy conservation effect of an image forming apparatus having a sleep mode without an increase in cost.

### SUMMARY OF THE INVENTION

It is an object of the present invention to at least partially solve the problems in the conventional technology.

According to an embodiment, an image forming apparatus is connected to a network and is configured to transit into an energy-conservation standby state. The image forming apparatus includes: a switching element that switches on/off power supply of a peripheral device connected to a body of the image forming apparatus; and a control unit that controls on/off-switching operation of the switching element. When the image forming apparatus recovers from the energy-conservation standby state, the control unit switches on the power supply of the peripheral device for a short time; performs an initialization operation of the peripheral device; determines whether an option is mounted on the peripheral device; and thereafter switches on/off of the power supply of the peripheral device based on a type of a job input into the image forming apparatus over the network.

According to another embodiment, an energy-conservation control method is provided for an image forming apparatus that is connected to a network and configured to transit into an energy-conservation standby state. The energy-conservation control method includes: switching on power supply of a peripheral device for a short time when the image forming apparatus recovers from an energy conservation mode; performing an initialization operation over the peripheral device; determining whether an option is mounted on the peripheral device; and thereafter, switching, when the peripheral device is determined not to be used based on a type of a job input into the image forming apparatus over the network, off the power supply of the peripheral device.

According to still another embodiment, provided is a computer program product including a computer readable medium having computer program for causing, when executed by a computer, the computer to perform energy conservation control method mentioned above in an image forming apparatus connected to a network and configured to transit into an energy-conservation standby state.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram illustrating a system configuration of an image forming apparatus according to an embodiment;
Fig. 2 is a block diagram illustrating a circuit configuration of a circuit that switches on/off a scanner power supply;
Fig. 3 is a flowchart illustrating a procedure of an operation of switching on/off the scanner power supply at recovery from sleep; and
Fig. 4 is an explanatory diagram illustrating state transition of the image forming apparatus.

### DETAILED DESCRIPTION OF THE PREFERRED EMBODIMENTS

According to an aspect of an embodiment, an image forming apparatus having a structure that permits on/off switching of power supply of peripheral device such as a scanning unit (scanner/ADF) is configured: to switch on the power supply of the peripheral device for a short time when the image forming apparatus recovers from an energy conservation mode (sleep mode); to perform initialization operation of the peripheral device; to obtain information about whether an option is mounted on the peripheral device; and thereafter, when the peripheral device is not to be used, to switch off the power supply of the peripheral device.

Embodiments will be described below with reference to the accompanying drawings.

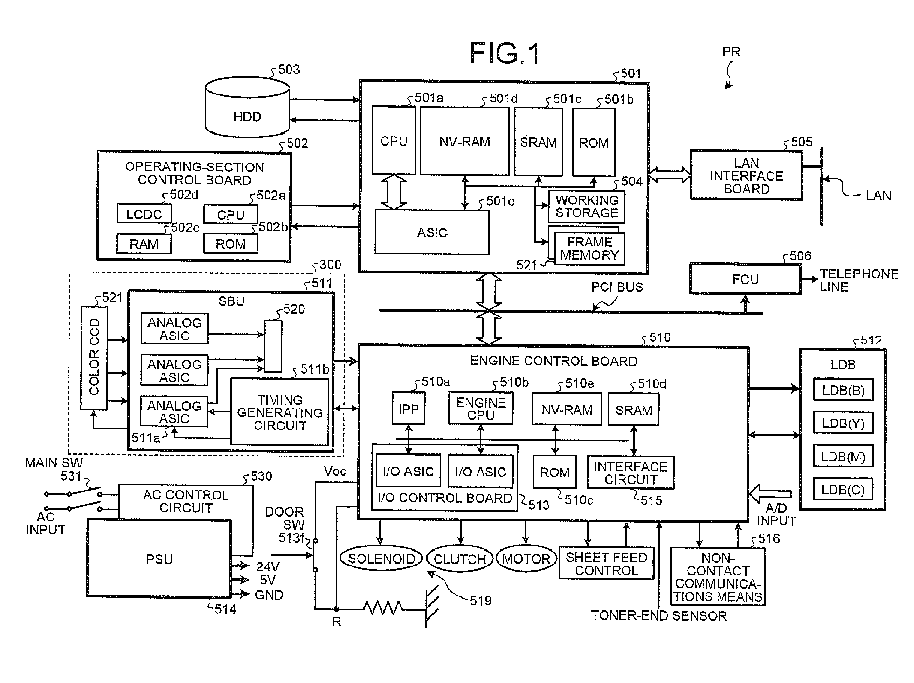

Fig. 1 is a block diagram illustrating a system configuration of an image forming apparatus according to an embodiment. The system of an image forming apparatus PR includes a system controller board (hereinafter, referred to as "controller board") 501 that performs overall control of the image forming apparatus PR, an operating-section control board 502 connected to the controller board 501, a hard disk drive (HDD) 503 that stores image data, a local area network (LAN) interface board 505, a facsimile control unit (FCU) 506 connected to a general-purpose PCI bus, an IEEE1394 board, a wireless LAN board, a universal serial bus (USB) board, an engine control board 510 connected to the controller board 501 via the PCI bus, an input/output (I/O) control board 513 that is connected to the engine control board 510 and controls inputs/outputs to/from the image processing apparatus, a scanner board (SBU) 511 that reads in a to-be-copied original (image), and a laser diode board (LDB) 512 that writes image data onto an image carrier (e.g., a photosensitive drum).

A scanning unit 300 that performs optical reading of an original causes an original-illuminating light source to scan an original and forms an image of the original on a charge coupled device (CCD) 521. The CCD 521 performs photoelectric conversion of the image of the original, or put another way, light reflected from the original, to thereby generate color image signals of red (R), green (G), and blue (B). The CCD 521 is a three-line color CCD that generates R, G and B image signals and inputs the generated image signals to an analog ASIC 511a of the SBU board 511. The SBU board 511 includes a timing generating circuit 511b and the analog ASICs 511a, which are provided for each of R, G, and B colors. The timing generating circuit 511b generates drive timing signals for the color CCD 521 and the analog ASICs 511a. The outputs of the CCD 521 are converted into R, G, and B image data and subjected to shading correction performed in the analog ASIC 511a, and transmitted via an output I/F 520 to an image processing processor (IPP) 510a through an image data bus. Meanwhile, the scanning unit 300 includes a scanner unit and an automatic document feeder (ADF).

The IPP 510a is programmable computing means that performs image processing. The IPP 510a performs tone processing and the like on the R, G, and B image data input into the IPP 510a. The image data transferred from the SBU 511 to the IPP 510a is subjected in the IPP 510a to correction of signal degradation (signal degradation related to the scanner) caused by an optical system and digitization, and is stored in frame memory 521 of the controller board 501.

Mounted on the controller board 501 are: a main CPU 501a; a ROM 501b that stores program that controls the controller board 501; a SRAM 501c which is a working storage for use by the main CPU 501a; a nonvolatile (NV)-RAM 501d that internally has a lithium battery and includes a clock and a backup copy of the SRAM 501c; an ASIC 501e that performs system bus control of the controller board 501, frame memory control, and input-output control such as first-in, first-out control of the CPU; an interface circuit therefor; and the like. The controller 501 has functions of a plurality of applications including a scanner application, a facsimile application, a printer application, and a copier application, and controls the overall system. The controller 501 also interprets an input entered from the operating-section control board 502 and displays settings of the system and states thereof on a display section of the operation section. The PCI bus is connected to other units, to which image data and control commands are transferred in a time division manner via image-data bus/control-command bus.

The LAN interface board 505 is a communications interface board that is connected to an intra-company LAN and provides communications interface between the controller 501 and the intra-company LAN. Communications with external equipment are carried out via the LAN interface board 505.

The HDD 503 is used as an application database that stores application programs of the system and equipment energizing information relating to the printer and image-forming processing equipment, and as an image database that stores image data relating to a scanned image and an image to be written, or put another way, image data and document data.

Mounted on the operating-section control board 502 are a CPU 502a, a ROM 502b, a RAM 502c, and an ASIC (liquid crystal display controller (LCDC)) 502d that controls an LCD and key entry. Written to the ROM 502b are control programs for the operating-section control board 502 that controls input reading and display output pertaining to the operating-section control board 502. The RAM 502c is a working storage for use by the CPU 502a. The CPU 502a of the operating-section control board 502 carries out communications with the system controller 501 to perform input control when a user operates an operation panel (not shown) to configure system settings, and display control of displaying settings and states of the system to the user.

Writing signals of black (B), yellow (Y), cyan (C), and magenta (M) output from a working storage 504 of the controller 501 are input into B, Y, M, and C laser diode (LD) writing circuits of the laser diode control board (LDB) 512. Each of the writing signals is subjected to LD current control (modulation control) in the corresponding LD writing circuit and output to a corresponding one of LDs.

The engine control board 510 primarily performs image forming control of the image forming apparatus and includes a CPU (hereinafter, referred to as "engine CPU") 510b, an IPP 510a that performs image processing, a ROM 510c that stores program necessary for controlling copying and printing, a SRAM 510d and an NV-RAM 510e that are necessary for the control, and the I/O control board 513. Mounted on the NV-RAM 510e are SRAM and memory that stores data in EEPROM when power-off is detected. The engine control board 510 also includes a serial interface for exchanging signals with CPU(s) that performs other control. Meanwhile, each of the main CPU 501a and the engine CPU 210b includes a control section and a computing section. The control section controls instruction interpretation and program control flow. The computing section performs computations.

I/O_ASICs 513a and 513b mounted on the I/O control board 513 are ASICs that control I/Os (a counter, a fan, a solenoid, a motor, and the like) 519 near the engine control board 510. The I/O control board 513 and the engine control board 510 are connected via a synchronous serial interface. Mounted on the I/O control board 513 is a sub CPU that performs I/O control of the image forming apparatus. Whether a new process cartridge has been mounted is detected also when a door is opened and closed. It is possible that, when a door SW 513f connected to the I/O control board 513 becomes open, a cartridge is exchanged; therefore, whether a cartridge has been exchanged is checked, and a result of the check is transmitted to the engine control board 510. The engine CPU 510b also performs, for example, sheet feed control of the ADF and a sheet feed device (not shown).

An interface circuit 515 is mounted on the engine control board 510. The interface circuit 515 is an interface circuit for interface with a memory tag mounted on a cartridge. When a contact-type memory tag is used, an access to the memory of the cartridge is made via the interface circuit 515. Non-contact communications means 516 is an interface for a case where a non-contact memory tag is used. In that case, the non-contact communications means 516 is equipped with a transmitting/receiving antenna and carries out communications with the engine control board 510 across an asynchronous serial interface. For instance, a signal output from the engine control board 510 is modulated into a predetermined transmission signal by the non-contact communications means 516 and transmitted to a transmitting/receiving antenna provided on a sheet feed section or the like. A non-contact nonvolatile storage means (ID chip) on the side of a unit such as a sheet feed tray receives the signal with a receiving antenna, demodulates the predetermined transmission signal, converts the demodulated signal into a parallel signal, and transmits the parallel signal to internal memory.

A power supply device of the image forming apparatus PR includes an AC control circuit 530 and a power supply circuit (power supply unit (PSU)) 514. When a main power-supply switch (main SW) 531 connected to a commercial power supply is switched on, AC is supplied to the AC control circuit 530 where the AC is converted into constant DC voltage, and supplied from the PSU 514 to each section of the image forming apparatus PR.

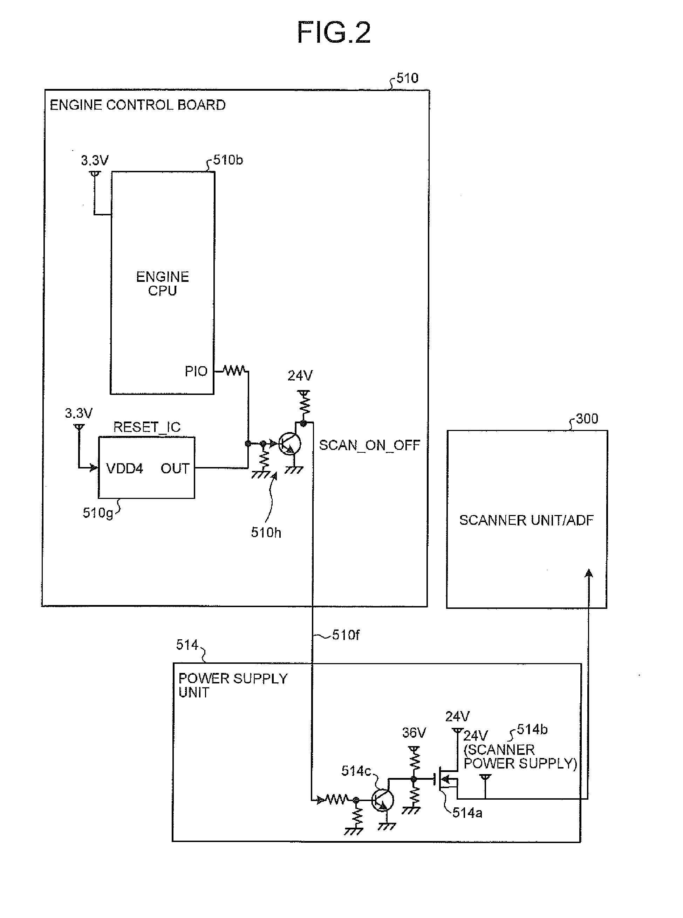

Fig. 2 is a block diagram illustrating a circuit configuration of a circuit that switches on/off power supply of a scanner, which is an example of the peripheral device.

On/off of scanner power supply 514b is controlled by the engine CPU 510b on the engine control board 510. A field effect transistor (FET) 514a or a transistor is contained on the PSU 514. Switching on the FET (transistor) 514a causes power supply (the scanner power supply 514b: 24 V) to the scanning unit 300 to be switched on/off.

Meanwhile, although a configuration that employs the FET 514a has been described, another configuration that employs a power supply integrated circuit (IC) such as a DC-DC converter/regulator in place of the FET 514a can be employed. The configuration that employs a power supply IC may be preferably configured such that a control signal output from the engine CPU 510b of the engine control board 510 is input into an enable terminal of the power supply IC to thereby control power supply to the scanning unit 300.

A reset IC 510g is connected to a control signal line 510f for use in switching on/off the power supply circuit 514 from the engine CPU 510b. The reset IC 510g is provided for a possible case where an I/O power supply of the engine CPU 510b does not rise to a predetermined value at power-on/recovery-from-sleep. In a condition where an I/O power supply (power supply of 3.3 V) of the engine CPU 510b has not risen to a predetermined value, logic for a parallel input/output (PIO) port is undefined, and switching on/off of the scanner power supply 514b can be caused by an unintended pulse signal (what is called as a mustache-like pulse). However, switching on/off of the scanner power supply 514b at an unintended time can be prevented by adding the reset IC 510g to the control signal line 510f. Meanwhile, reference numeral 510h denotes a first switching circuit to be switched on/off by the engine CPU 510b on the engine control board 510; 514c denotes a second switching circuit that is to switch on/off the scanner power supply 514b depending on on/off of the first switching circuit 510h. Each of the switching circuits 510h and 514c includes a transistor for switching.

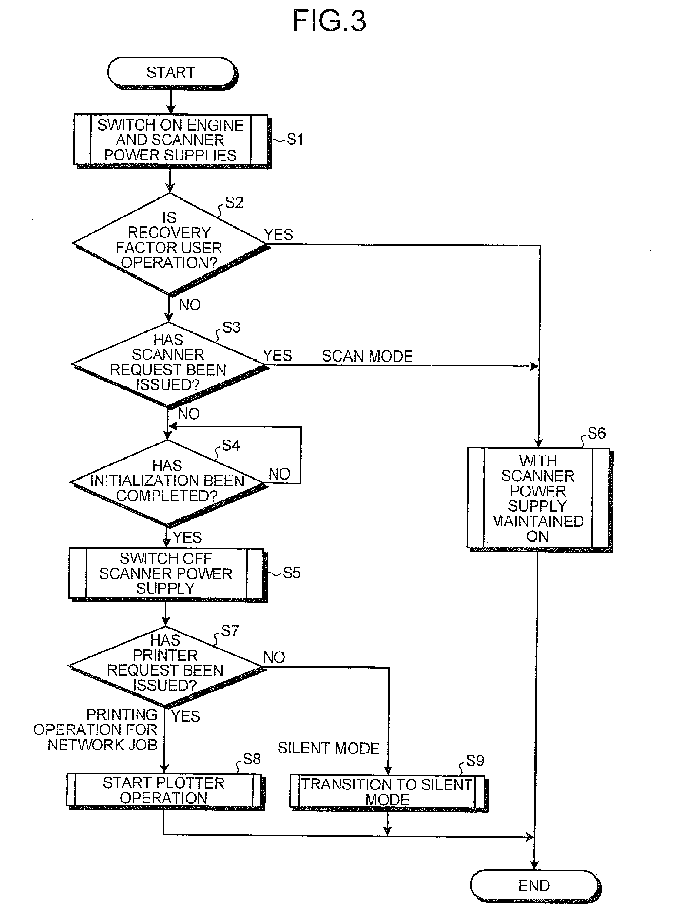

Fig. 3 is a flowchart illustrating a procedure of a control operation for on/off control of the scanner power supply 514b to be performed by the engine CPU 510b on the engine control board 510 at recovery from sleep according to the present embodiment.

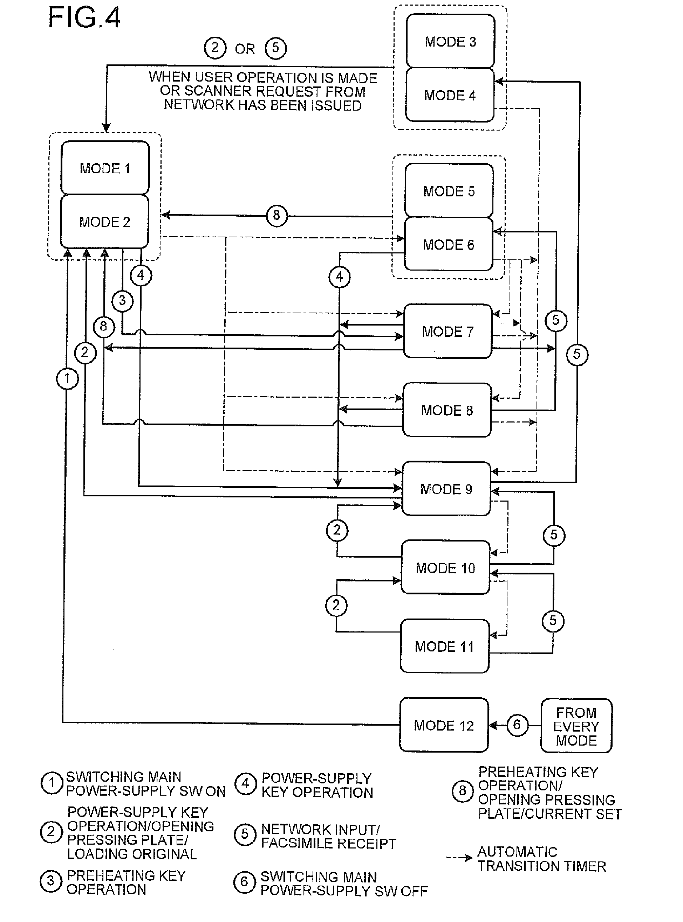

Referring to Fig. 3, when a recovery factor for recovery from sleep is externally input into the image forming apparatus, the image forming apparatus makes transition into a corresponding mode. The state transition will be described in detail later with reference to Fig. 4.

Examples of the recovery factor include opening-and-closing the pressing plate, loading an original on the ADF, user operation such as operation of a power-supply key on the operating section, and recovery from a network job. When the recovery factor is of a user operation, the image forming apparatus switches on the scanner power supply 514b and also switches on all of the other power supplies on the engine side, makes transition into a state where copying can be performed, and maintains the state (Steps S1, S2, and S6). When the recovery factor is recovery from a network, state transition of the image forming apparatus PR occurs depending on the job. First, when the job is input into the image forming apparatus PR over the network (LAN) via the LAN interface board 505, all of the power supplies (including the scanner power supply 214b) on the engine side are switched on according to an instruction of the main CPU 501a (Step S1).

When the recovery factor is not of a user operation, which function is to be used by the job is determined (Step S3). This determination is made based on a command fed from the controller 501. In this control procedure, determined is which one of a print job, a network scanner job (TWAIN), and a facsimile the job. When the job is of a scanner job (Yes at Step S3), the power supply of the scanning unit 300 is maintained on because the scanner is to be used by a scanner (Step S6).

When the job is of a print job or facsimile reception, it is not necessary to use the scanning unit 300 (No at Step S3). Therefore, after performing the initialization operation of the scanning unit 300 and obtaining information about whether a scanner option is mounted (YES Step S4), the scanner power supply 514b is switched off (Step S5). Subsequently, because it is necessary to output a printout of the received job (Step S7), printing is started (Step S8). When the job is of a silent-mode job (No at Step S7), a plotter (writing) operation is not performed, but only data exchange between a PC and the image forming apparatus PR is performed, and then transition into a silent mode (mode 9, which will be described later) is made (Step S9).

In this control procedure, the engine CPU 510b switches ON the power supplies of the engine and the scanning unit (Step S1), and determines a user recovery factor (Step S2) whether a scanner request has been issued (Step S3) and whether the initialization operation has been completed (Step S4). At a point in time when the initialization operation has been completed, the engine CPU 510b switches OFF the power supply of the scanning unit 300. The processes from switch-on of the power supply at Step S1 to switch-off of the power supply at Step S5 are processes to be performed by software and processing time thereof is considerably short. Thus, performing processing as in the flowchart illustrated in Fig. 3 makes it possible to perform management during the initialization operation and state management of equipment in a short period of time and reliably only by processing by software in the engine CPU 510b.

Fig. 4 is an explanatory diagram illustrating specific state transition of the image forming apparatus.

Mode 12 is a shutdown mode, which is a state from immediately after switch-off of the main power supply until data in the HDD has been saved. In the shutdown mode, the AC power supply is in a shut-off state where the image forming apparatus PR can be started up only by switch-on of the main power-supply switch (rocker SW) 531. In this state, all of an LCD of the operation panel (not shown) of the image forming apparatus PR, and a backup LED (or, an auxiliary LED) and a power-supply LED of a writing device are off; a fixing device is in a stop state; the scanning unit (denoted as "scan." in Fig. 4) 300 is also in an off state.

Mode 11 is a mode referred to as a suspend to RAM (STR) mode, in which clock of the main CPU 501a of the controller board 501 is disabled to suppress electricity consumption. The STR mode is one of "suspend" forms that place a CPU in a standby state to suppress electricity consumption, and is a mode that stops power supply to almost all devices including a CPU and an HDD with data pertaining to present state stored in memory. This is defined as Advanced Configuration and Power Interface (ACPI) S3 state. In the STR mode, data pertaining to a state where an OS has been started up is stored in memory. Accordingly, recovery is performed by resuming the pre-suspend state rather than restarting the OS. In the STR mode, the engine CPU 510b is in a startup-trigger wait state. In this state, as in mode 12, all of the LCD, the backup LED, and the power-supply LED are off; the fixing device is in the stop state; the scanning unit 300 is also in the off state.

Mode 10 is a sleep mode (also referred to as "engine off mode"), in which the power supplies on the engine side are off but only the power supply of the controller 510 is on. Put another way, the image forming apparatus PR is in an engine-off state; the engine CPU 510b is in the startup-trigger wait state. In this state, as in mode 12, all of the LCD, the backup LED, and the power-supply LED are off; the fixing device is in the stop state; the scanning unit 300 is also in the off state.

Mode 9 is a silent startup mode (heat off/silent mode), which is a mode that does not require the initialization operation, such as an access to the HDD, of the image forming apparatus PR but an access to data in the image forming apparatus PR is to be made. In the silent startup mode, the fixing device is in the off state and in the silent state. The main CPU 501a is in a command wait state. In this state, the power-supply LED is in a blinking state; the LCD and the backup LED are off; the fixing device is in the stop state; the scanner is also in the off state.

Mode 8 is a low power mode, in which the image forming apparatus PR in a low power state, while the main CPU 501a is in the command wait state. In this state, the scanning unit 300 is on; a fixation temperature of the fixing device is in a low-temperature state. The LCD is off; the preheating LED and the power-supply LED are on. This state is a state where a predetermined low power is supplied to the fixing device in advance and the fixing device is on standby in the preset low-temperature state so that the image forming apparatus PR can recover when a user desires to use the image forming apparatus PR.

Mode 7 is a preheating mode (low power standby mode), in which the image forming apparatus PR is in a preheating state, while the main CPU 501a is in the command wait state. In this state, the scanning unit 300 is on; the fixation temperature of the fixing device is in a medium-temperature state. The LCD is off; the preheating LED and the power-supply LED are on. This state is a state where a predetermined medium power is supplied to the fixing device and the fixing device is on standby in the preset medium-temperature state, which is higher than the low temperature of mode 8 but lower than the fixation temperature, so that the image forming apparatus PR can recover when a user desires to use the image forming apparatus PR.

Modes 6 and 5 are a pseudo preheating mode. The image forming apparatus PR is in a nighttime standby state (background mode) in mode 6 and in a pseudo-preheating/low-power state (background output mode) in mode 5. The main CPU 501a is in the command wait state in mode 6 and in a printing state in mode 5. More specifically, when the image forming apparatus PR receives a command input while being on standby in mode 6, the image forming apparatus PR performs printing in mode 5 according to the command input. In modes 6 and 5, the LCD is off; the backup LED and the power-supply LED are on; the fixation temperature of the fixing device is in a high-temperature state; the scanning unit 300 is in the on state. As described above, in the present embodiment, the fixation temperature is set so as to increase from mode 8 to mode 7, and then to mode 6 in descending order of the mode number, and electric power is supplied to (a heater of) the fixing device in advance so that the image forming apparatus PR can recover immediately when a user desires to use the image forming apparatus PR. This embodiment makes it possible to reduce a fixation heating-up period from mode 8 to mode 7, and then to mode 6 in the descending order of the mode number, and hence to reduce a recovery time of the same in the same order.

Modes 4 and 3 are a scanner-power-supply off mode. The scanner-power-supply off mode is a mode that reduces, in a case where only a plotter of the image forming apparatus PR is to be used, electricity that would otherwise be unnecessarily used by the scanning unit 300. The image forming apparatus PR is in the nighttime standby state (background mode) in mode 4 and in a pseudo print-off mode (background output mode) in mode 3. The main CPU 501a is in the command wait state in mode 4 and in the printing state in mode 3. More specifically, in the scanner-power-supply off mode, the scanner power supply is in the off state. When the image forming apparatus PR receives a command input while being on standby in mode 4, the image forming apparatus PR performs printing in mode 3 according to the command input. In modes 4 and 3, the LCD, the backup LED, and the power-supply LED are off; the fixation temperature of the fixing device is in the high-temperature state; the scanning unit 300 is in the off state.

Modes 2 and 1 are a standby/output mode, in which all the power supplies are on. The image forming apparatus PR is in a standby state (standby mode) in mode 2 and in a plotter output mode (plotter output mode) in mode 1. The main CPU 501a is in the command wait state in mode 2 and in the printing state in mode 1. Put another way, the image forming apparatus PR is in a state where all the power supplies are on. When the image forming apparatus PR receives a command input while being on standby in mode 2, the image forming apparatus PR performs printing in mode 1 according to the command input. In modes 2 and 1, the LCD, the backup LED, and the power-supply LED are on; the fixation temperature of the fixing device is in the high-temperature state; the scanning unit 300 is in the on state.

Meanwhile, in Fig. 4, the numeral "1" in a circle denotes an operation of switching on the main power-supply SW (rocker SW); "2" in a circle denotes an operation of the power-supply key or an operation of opening the pressing plate and loading an original; "3" in a circle denotes a preheating key operation; "4" in a circle denotes a power-supply key operation; "5" in a circle denotes an operation of network input and facsimile receipt; "6" in a circle denotes an operation of switching off the main power-supply SW; "8" in a circle denotes a preheating key operation or an operation of opening the pressing plate and loading an original. Each arrow indicated by alternate long and short dash line indicates transition that occurs depending on an elapsed time counted by an automatic transition timer.

Generally, copying is performed in modes 1 and 2. When the image forming apparatus PR recovers from the sleep mode of mode 10 or the STR mode of mode 11, the image forming apparatus PR switches on the power supply of the scanning unit 300 (Step S1: "2") to make transition into modes 1 and 2. Thereafter, when the recovery factor is of a user operation (opening-and-closing the pressing plate and loading an original on the ADF, or an operation of the power-supply key on the operating section ("2")) (Yes at Step S2), the power supply of the scanning unit 300 remains on (Step S6/mode 2). When the recovery factor is a scanner request (TWAIN request) from the network (Yes at Step S3), the power supply of the scanning unit 300 similarly remains on (Step S6/mode 6).

In contrast, when the recovery factor is of a print request from the network or facsimile receipt (No at Step S3: "5"), after initialization of the image forming apparatus PR has been completed (Yes at Step S4), transition into modes 3 and 4 is made, the power supply of the scanning unit 300 is switched off (Step S5: mode 3), and a plotter operation is started (Yes at Step S7) (Step S8: mode 1). When the image forming apparatus PR in a state where the scanner power supply is off receives a user operation (opening-and-closing the pressing plate/loading an original on the ADF, or an operation of the power-supply key on the operating section: "2") or a scanner request (TWAIN request) from the network ("5"), the power supply of the scanning unit 300 is switched on, and transition into mode 1 or 2 is made.

When a predetermined period of time elapses without transition from mode 2, state transition into a next lower-power-consumption mode sequentially occurs as in the following: the pseudo preheating mode of modes 5 and 6; the preheating mode of mode 7; the low power mode of mode 7; the silent startup mode of mode 9; the sleep mode of mode 10; and the STR mode of mode 11. A configuration in which the transition occurs from the pseudo preheating mode of mode 5 to the sleep mode of mode 10, rather than in a descending order of power conservation, can alternatively be employed.

In each of the modes, when the main power-supply SW is switched off ("6"), transition into the shutdown mode of mode 12 occurs. In mode 12, all the power supplies are shut off, and transition into mode 2 or mode 1 is made only by switch-on of the main power-supply SW ("1"). When the preheating key is switched on in mode 1 or 2 ("3"), transition into the preheating mode of mode 7 occurs. Furthermore, when the power-supply key is operated to switch off the power supply in any one of the states (where the main power supply is on) of modes 1, 2, modes 5, 6, mode 7, and mode 8, transition into the silent startup mode of mode 9 occurs. When a user operation (opening-and-closing the pressing plate/loading an original on the ADF, or a preheating key operation ("8")) is performed in any one of the states of mode 8, mode 7, and modes 6 and 5, transition into mode 1 or 2 occurs.

Meanwhile, each pair of modes 1 and 2, modes 3 and 4, and modes 5 and 6 are identical in the state of the power supply but differ only in that modes 2, 4, and 6 are standby states; put another way, each pair differs from each other only in power consumption.

Meanwhile, in the present embodiment, the peripheral device has been described by way of the example of the scanning unit 300 that includes the scanner unit and the ADF; however, the same applies to other peripheral device (peripheral device) annexed to the image forming apparatus.

As described above, according to an aspect of the embodiment, the image forming apparatus having a structure that permits on/off switching of the power supply of the scanning unit (ADF) 300 is configured to switch on power supply of the scanning unit 300 for a short time when the image forming apparatus recovers from an energy conservation mode (sleep mode: mode 10), perform initialization operation of the scanning unit, obtain information about whether an option is mounted on the scanning unit 300, and thereafter, when the scanning unit 300 is not to be used, switch off the power supply of the scanning unit 300. This makes it possible to perform management during the initializing operation and state management of equipment in a short period of time and reliably only by software processing, thereby further increasing energy conservation effect without an increase in cost.

Meanwhile, the energy-conservation standby state in the appended claims correspond to the sleep mode (mode 10); the image forming apparatus corresponds to reference symbol PR; the peripheral device corresponds to the scanning unit 300; the power supply corresponds to the PSU 514; the switching element corresponds to the first switching circuit 510h and the second switching circuit 514c; the control unit corresponds to the engine CPU 510b; the user operation corresponds to reference numeral "2" and "8"; the sleep state corresponds to the state of mode 10; the state where recovery factor for recovery from the energy-conservation standby state is a user operation and the power supply of the peripheral device remains on corresponds to mode 2; the operation of switching off the power supply of the peripheral device in a case where a job input from the network is a print job or facsimile reception corresponds to Step S5 and mode 3; the operation of switching on the power supply of the peripheral device and maintaining the state in a case where a job input from the network is a scanner job corresponds to Steps S3, S6, and mode 6; the FET corresponds to reference numeral and symbol 514a; the engine corresponds to the scanning unit 300, the LDB 512, and the sheet feed device; the engine control board corresponds to the engine control board 510. The modes are to be set by the main CPU 501a.

According to an aspect of the embodiment, energy conservation of an image forming apparatus having a sleep mode can be further increased without an increase in cost.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image forming apparatus (PR) that is connected to a network and configured to transit into an energy-conservation standby state, the image forming apparatus (PR) comprising:
a switching element (510h and 514c) that switches on/off power supply (514b) of a peripheral device (300) connected to a body of the image forming apparatus (PR); and
a control unit (510b) that controls on/off-switching operation of the switching element (510h and 514c), wherein
when the image forming apparatus (PR) recovers from the energy-conservation standby state, the control unit (510b)
switches on the power supply (514b) of the peripheral device (300) for a short time;
performs an initialization operation of the peripheral device (300);
determines whether an option is mounted on the peripheral device (300); and thereafter
switches on/off of the power supply (514b) of the peripheral device (300) based on a type of a job input into the image forming apparatus (PR) over the network.

2. The image forming apparatus (PR) according to claim 1,
wherein
when the job is of a job that does not use the peripheral device (300), the control unit (510b) switches off the power supply (514b) of the peripheral device (300).

3. The image forming apparatus (PR) according to claim 1, wherein
when a recovery factor that has caused the image forming apparatus (PR) to recover from the energy-conservation standby state is of a user operation, the control unit (510b) switches on the power supply (514b) of the peripheral device (300) and maintains a state where the power supply (514b) is on.

4. The image forming apparatus (PR) according to claim 1, wherein
when the job input over the network is any one of a print job and facsimile reception, the control unit (510b) switches off the power supply (514b) of the peripheral device (300).

5. The image forming apparatus (PR) according to claim 1, wherein
when the job input over the network is of a scanner job, the control unit (510b) switches on the power supply
(514b) of the peripheral device (300) and maintains a state where the power supply (514b) is on.

6. The image forming apparatus (PR) according to any one of claims 1 to 5, wherein
the power supply (514b) of the peripheral device (300) is supplied from a power supply unit (514), and
the switching element (510h and 514c) performs the on/off-switching operation by driving any one of an FET (514a) and a power supply IC contained on the power supply unit (514) according to a control signal fed from the control unit (510b).

7. The image forming apparatus (PR) according to claim 6, wherein the control unit (510b) is implemented on an engine control board (510) that controls an engine (300 and 512) that forms an image.

8. The image forming apparatus (PR) according to any one of claims 1 to 7, wherein
the peripheral device (300) is of a scanning unit (300) that includes a scanner and an automatic document feeder.

9. An energy-conservation control method for an image forming apparatus (PR) that is connected to a network and configured to transit into an energy-conservation standby state, the energy-conservation control method comprising:
switching on power supply (514b) of a peripheral device (300) for a short time when the image forming apparatus (PR) recovers from an energy conservation mode;
performing an initialization operation over the peripheral device (300);
determining whether an option is mounted on the peripheral device (300); and thereafter,
switching, when the peripheral device (300) is determined not to be used based on a type of a job input into the image forming apparatus (PR) over the network, off the power supply (514b) of the peripheral device (300).

10. A computer program product comprising a computer readable medium having computer program for causing, when executed by a computer, the computer to perform energy conservation control method in an image forming apparatus (PR) connected to a network and configured to transit into an energy-conservation standby state by performing:
switching on power supply (514b) of a peripheral device (300) for a short time when the image forming apparatus (PR) recovers from an energy conservation mode;
performing an initialization operation over the peripheral device (300);
determining whether an option is mounted on the peripheral device (300); and thereafter,
switching, when the peripheral device (300) is determined not to be used based on a type of a job input into the image forming apparatus (PR) over the network, off the power supply (514b) of the peripheral device (300).
